Europäisches Patentamt

European Patent Office

Office européen des brevets

(19)

(11) Numéro de publication : **0 210 201**
**B1**

(12) # FASCICULE DE BREVET EUROPÉEN

(45) Date de publication du fascicule du brevet :
**02.11.89**

(51) Int. Cl.⁴ : **G 01 M 3/32**

(21) Numéro de dépôt : **86900730.2**

(22) Date de dépôt : **04.02.86**

(86) Numéro de dépôt international :
**PCT/CH 86/00014**

(87) Numéro de publication internationale :
**WO/8604675 (14.08.86 Gazette 86/18)**

(54) **SIGNALISATEUR DE FUITE POUR RESERVOIR.**

(30) Priorité : **05.02.85 CH 501/85**
**10.09.85 CH 3887/85**
**23.09.85 CH 4104/85**
**09.10.85 CH 4344/85**

(43) Date de publication de la demande :
**04.02.87 Bulletin 87/06**

(45) Mention de la délivrance du brevet :
**02.11.89 Bulletin 89/44**

(84) Etats contractants désignés :
**DE FR GB IT**

(56) Documents cités :
**DE--A-- 2 638 199**
**DE--B-- 1 297 420**
**FR--A-- 1 367 342**
**US--A-- 4 386 525**

(73) Titulaire : **THIEBEAUX, Jean-Claude**
**Rue Jean-Etienne Liotard 77**
**CH-1203 Genève (CH)**

(72) Inventeur : **THIEBEAUX, Jean-Claude**
**Rue Jean-Etienne Liotard 77**
**CH-1203 Genève (CH)**

Jouve, 18, rue St-Denis, 75001 Paris, France

## Description

### Domaine technique

La présente invention concerne un signalisateur de fuite pour réservoir fonctionnant par dépression dans le volume gazeux au-dessus de la substance liquide à semi-liquide que contient un réservoir, telle, par exemple, une citerne à mazout ou à gasoil, enterré ou non, fermé hermétiquement, les propriétés physiques de la substance étant compatibles avec une dépression à sa surface.

Ce signalisateur retient la substance aux endroits des fuites dans tout son volume, y compris aux canalisations et à leurs raccordements, et indique à l'avance si, en raison d'un trop grand taux de fuite, le réservoir ne sera plus satisfaisant pour un nouveau remplissage, ce qui permet, d'une part, d'éviter une perte de substance pouvant être considérable, laquelle, s'il s'agit de mazout ou de gasoil, polluerait dangereusement les eaux souterraines, et, d'autre part, de prendre à l'avance les dispositions nécessaires pour la réparation ou le remplacement du réservoir avant d'arrêter l'exploitation de l'installation alimentée en substance par ce réservoir, il peut comprendre, notamment, un dispositif, qu'il commande, de verrouillage de l'orifice de remplissage ou de l'accès à cet orifice ainsi qu'un indicateur du taux de fuite maximal pouvant être atteint après remplissage. En outre, la stabilité de la dépression dans le volume de la substance permet d'indiquer avec précision la quantité de substance contenue dans le réservoir et procure un débit constant de l'appareillage de soutirage de la substance, ce qui, dans le cas d'une installation de chauffage, entraîne une consommation stable du brûleur d'où une économie de carburant et une moindre pollution de l'environnement.

### Technique antérieure

La rétention de la substance d'un réservoir qui fuit, par dépression dans son volume gazeux, est un procédé connu.

Les fascicules de brevet CH 399 325, DE 1 297 420, FR 1 367 342, CH 588 691, CH 591 073 et DE 26 38 199 A 1, décrivent différentes variantes de ce procédé.

Les installations existantes comprennent un détecteur mesurant la dépression au bas du réservoir et commandant au moins une pompe aspirant du gaz au-dessus de la substance pour y maintenir une dépression suffisante à la retenir en cas de fuite, des soupapes permettant l'expulsion du volume de gaz correspondant à la quantité de substance introduite par remplissage et pour réduire l'augmentation de dépression due aux soutirages de substance, des amortisseurs sonore et optique se déclenchant lorsque le débit de gaz pénétrant dans le réservoir par une fuite devient plus important que le débit d'au moins une pompe, la dépression au bas du réservoir devenant inférieure à une valeur prédéterminée, et une minuterie empêchant le fonctionnement de l'avertisseur sonore pendant le remplissage du réservoir et le rétablissement de la dépression.

En plus, le fascicule de brevet CH 588 691 décrit comment augmenter la sensibilité de détection d'une fuite en limitant, au moyen d'une minuterie, la durée de fonctionnement d'une pompe et les fascicules de brevet CH 591 073 et DE 26 38 199 A 1 décrivent comment varier la durée d'une telle minuterie inversement proportionnellement à la variation de la dépression dans le volume gazeux du réservoir.

### Exposé de l'invention

Dans une installation équipée selon le procédé cité, le poids spécifique de la substance étant $\gamma$, la dépression d au bas du réservoir et la dépression, égale à $\gamma h + d$, dans la substance à une hauteur h par rapport au bas du réservoir sont relativement constantes tandis que la dépression D dans le volume gazeux, égale à $\gamma H + d$, est variable et sa variation est proportionnelle à celle de la hauteur H de substance contenue dans le réservoir.

Le débit $Q_f$ de gaz pénétrant dans le réservoir par une fuite varie proportionnellement à la racine carrée de la dépression à l'endroit de cette fuite ; cette variation est donc approximativement proportionnelle à celle de la racine carrée de la hauteur H pour une fuite située dans le volume gazeux.

Le débit $Q_p$ de la pompe, quel que soit son mode de fonctionnement, varie inversement à la variation de la dépression D et donc aussi à la variation de la hauteur H.

Une telle installation étant normalement en service, les soutirages de substance en réduisant progressivement la hauteur H et la dépression D diminue également ; consécutivement, le débit $Q_p$ de la pompe augmente tandis que le débit $Q_f$ de gaz par une fuite située dans le volume gazeux diminue.

Inversement, après remplissage du réservoir, l'augmentation de la dépression D réduit le débit $Q_p$ de la pompe et augmente le débit $Q_f$ de gaz de⋅sorte que l'alarme peut être déclenchée si la pompe ne parvient pas à rétablir la dépression d.

La sensibilité de détection d'une fuite est donc beaucoup plus grande lorsque le réservoir a été rempli que lorsqu'il était vide ou presque ; par exemple, par remplissage d'une citerne à mazout ou à gazoil, cette sensibilité est augmentée d'environ 50 à 500 % pour une fuite située, respectivement, en bas ou en haut du réservoir.

Les risques de fuite se situent surtout, d'une part, en haut du réservoir, par défaut d'herméticité de sa fermeture, là où la disproportion de sensibilité de détection d'une fuite entre un réservoir vide et un réservoir plein est la plus grande et, d'autre part, au bas du réservoir, par corrosion intérieure due à la concentration de l'eau contenue dans la substance et, s'il s'agit d'un réservoir enterré, aussi par corrosion extérieure due à la plus grande humidité du terrain, là où le débit de gaz pénétrant dans le réservoir à travers la substance et permettant de détecter une fuite est le plus faible alors que c'est là où l'écoulement de substance par une fuite, après remplissage du réservoir, dure le plus longtemps et avec le plus grand débit jusqu'à ce que l'équilibre hydrostatique soit atteint à l'endroit de la fuite ou jusqu'à la vidange du réservoir si la pompe ne parvient pas à rétablir la dépression d. Une quantité considérable de substance peut donc ainsi s'écouler hors du réservoir.

La présente invention a pour but d'éviter une telle inopportunité de devoir vidanger un réservoir venant d'être rempli et les conséquences d'une détection de fuite trop tardive.

En l'absence de soutirage de substance, la dépression D dans le volume gazeux du réservoir, de même que la dépression en n'importe quel même endroit de la substance, subit une diminution $\Delta_d$, proportionnelle à la quantité de gaz $Q_f t_1$ pénétrant dans le volume gazeux de grandeur V pendant le temps $t_1$ d'arrêt de la pompe, telle que :

$$Q_f = \frac{\Delta_d V}{t_1} \qquad (1)$$

et pour ramener la dépression à sa valeur initiale, la pompe, de débit $Q_p$, doit évacuer du réservoir la quantité de gaz $Q_f t_1$ y ayant pénétré pendant le temps $t_1$ plus la quantité de gaz $Q_f t_2$ y pénétrant pendant le temps de pompage $t_2$, d'où :

$$t_2 = \frac{Q_f(t_1 + t_2)}{Q_p} = \frac{\Delta_d V}{Q_p - Q_f} \qquad (2)$$

et

$$Q_f = Q_p - \frac{\Delta_d V}{t_2} \qquad (3)$$

ou

$$Q_f = \frac{t_2}{t_1 + t_2} \times Q_p \qquad (4)$$

La section maximale d'une fuite encore située dans le volume gazeux après remplissage du réservoir dépend du débit minimal de pompage et de la durée maximale de rétablissement de la dépression ; celle d'une fuite située dans le volume de la substance dépend en plus de la quantité maximale de substance qu'il est toléré s'écouler hors du réservoir pendant son remplissage et le rétablissement de la dépression.

En désignant par A la section de la plus petite de ces fuites en tenant compte, s'il sagit de celle dans le volume de la substance et si le réservoir n'est pas entièrement vidé ou presque, d'une hauteur maximale de substance avant remplissage du réservoir, le débit $Q_f$ de gaz aussi appelé taux de fuite, lui correspondant est au plus égal à $ka\sqrt{D}$, k étant un facteur de proportionnalité, et il peut être défini que le taux de fuite ne permettant plus un nouveau remplissage du réservoir est atteint si l'une des inéquations suivantes, tirées respectivement des relations 1, 3 et 4, en y ayant remplacé le terme $Q_f$ par $ka\sqrt{D}$, est satisfaite :

$$\frac{\Delta_d}{t_1} \times \frac{V}{\sqrt{D}} > kA \qquad (5)$$

$$\frac{Q_p}{\sqrt{D}} - \frac{\Delta_d}{t_2} \times \frac{V}{\sqrt{D}} > kA \qquad (6)$$

$$\frac{t_2}{t_1 + t_2} \times \frac{Q_p}{\sqrt{D}} > kA \qquad (7)$$

ou, si le débit de pompage $Q_p$ est beaucoup plus grand que le débit de gaz $Q_f$ :

$$\frac{t_2}{t_1} \times \frac{Q_p}{\sqrt{D}} > kA \qquad (8)$$

Ces inéquations 5, 6, 7 et 8, peuvent évidemment s'écrire sous une multitude d'autres formes, par exemples, en ajoutant ou retranchant une même grandeur à chaque membre, en multipliant ou divisant chaque membre par une même grandeur, par l'inversion de chaque membre et du signe d'inégalité, et, évidemment, par plusieurs de ces opérations.

En particulier, peuvent aussi s'écrire,

l'inéquation 5 :

$$\frac{\Delta_d}{t_1} \times \frac{V}{\sqrt{D}} - kA > 0 \tag{9}$$

$$\Delta_d > kAt_1 \times \frac{\sqrt{D}}{V} \tag{10}$$

$$t_1 < \frac{\Delta_d}{kA} \times \frac{V}{\sqrt{D}} \tag{11}$$

l'inéquation 6 :

$$\frac{Q_p}{\sqrt{D}} - \frac{\Delta_d}{t_2} \times \frac{V}{\sqrt{D}} - kA > 0 \tag{12}$$

$$\Delta_d < \frac{\dfrac{Q_p}{\sqrt{D}} - kA}{\dfrac{1}{t_2} \times \dfrac{V}{\sqrt{D}}} \tag{13}$$

$$t_2 > \frac{\Delta_d \times \dfrac{V}{\sqrt{D}}}{\dfrac{Q_p}{\sqrt{D}} - kA} \tag{14}$$

l'inéquation 7 :

$$\frac{t_2}{t_1 + t_2} \times \frac{Q_p}{\sqrt{D}} - kA > 0 \tag{15}$$

$$t_1 < t_2 \times \frac{\dfrac{Q_p}{\sqrt{D}} - kA}{kA} \tag{16}$$

l'inéquation 8 :

$$\frac{t_2}{t_1} \times \frac{Q_p}{\sqrt{D}} - kA > 0 \tag{17}$$

$$t_1 < \frac{t_2}{kA} \times \frac{Q_p}{\sqrt{D}} \tag{18}$$

Dans les relations 1, 2, 3 et 4, et les inéquations 5, 6, 7 et 8, sous leurs diverses formes, les temps $t_1$ ou/et $t_2$ doivent correspondre à des écarts de dépression $\Delta_d$ suffisamment petits pour que ceux-ci soient pratiquement proportionnels aux temps $t_1$ ou/et $t_2$.

Du fait de cette proportionnalité, les temps $t_1$ et $t_2$, correspondant, dans les relations 2 et 4, à des écarts de dépression de même valeur ainsi qu'à une même valeur du volume gazeux V, peuvent être remplacés, dans les diverses formes des inéquations 7 et 8, par, respectivement, $t_1' \times \Delta_d/\Delta_d'$ et/ou $t_2' \times \Delta_d/\Delta_d''$, $t_1'$ et $t_2' \times \Delta_d'/\Delta_d''$ ou $t_1' \times \Delta_d''/\Delta_d'$ et $t_2'$, $\Delta_d'$ et/ou $\Delta_d''$ étant les écarts de dépression correspondant aux temps $t_1'$ et/ou $t_2'$ respectivement.

La détection d'un trop grand taux de fuite pour un nouveau remplissage du réservoir est effectuée par comparaison de deux grandeurs correspondant aux membres d'une des formes possibles des inéquations 5, 6, 7 ou 8.

Les variantes du signalisateur de fuite selon la présente invention sont définies chacune dans une des revendications 1 à 4.

Une grandeur proportionnelle à la dimension V du volume gazeux du réservoir peut être déterminée en introduisant la relation H = (D — d)/γ dans les formules de calculs de volumes, de surfaces lorsqu'une surface verticale est proportionnelle au volume comme, dans le cas d'un réservoir cylindrique disposé horizontalement, la surface d'un segment de cercle délimité par le niveau de la substance, ou encore simplement dans une différence de hauteurs lorsque la section horizontale du réservoir est uniforme sur sa hauteur.

La dépression D peut être déterminée au moyen d'un dispositif manométrique et la hauteur H en être déduite, ou bien la hauteur H est déterminée au moyen d'une jauge et la dépression D peut en être déduite.

La variation du débit de pompage $Q_p$ avec la variation de la dépression D peut dépendre du genre de pompe utilisée ; par exemple, le débit $Q_p$ d'une pompe à membrane, qui est le genre de pompe généralement utilisée pour cet usage, varie approximativement suivant la relation $Q_p = Q_m(D_m — D)/D_m$, $Q_m$ étant le débit maximal de la pompe à dépression nulle entre son entrée et sa sortie et $D_m$ la dépression maximale à son entrée à débit nul.

La variation de la fonction $D_m — D$ est approximativement proportionnelle à celle de la fonction $1/\sqrt{D}$ dans une large plage de la dépression D de sorte que, par exemple, avec une pompe à membrane dont la dépression maximale $D_m$ à son entrée est environ 400 millibars et pour une citerne à mazout ou à gasoil, le terme $Q_p$ ou le quotient $Q_p/\sqrt{D}$ dans les formes des inéquations 6, 7 et 8, peut être remplacé, en admettant une légère erreur qui est dans l'exemple cité d'environ ± 10 %, par $aQ_m/D_m\sqrt{D}$ ou $aQ_m/D_mD$, respectivement, le facteur a étant égal à la moyenne des valeurs extrêmes de la fonction $(D_m — D)\sqrt{D}$.

En réduisant suffisamment, par exemple par un étranglement, la section du conduit par lequel la pompe aspire le gaz du réservoir, le débit de pompage $Q_p$ dans les formes des inéquations 6, 7 et 8, est approximativement proportionnel à $\sqrt{D_m — D}$ et peut être remplacé par $k'A'\sqrt{D_m — D}$, A' étant la section réduite et k' un facteur de proportionnalité.

En disposant un régulateur réglant la dépression à l'entrée de la pompe à une valeur au moins égale à celle dans le volume gazeux du réservoir lorsqu'il est rempli de substance, le débit de pompage $Q_p$ est rendu constant.

## Description sommaire des dessins

Les Figs. 1 et 2 montrent, schématiquement, chacune une manière de réaliser l'invention par comparaison de deux grandeurs correspondant aux membres de formes de l'inéquation 5.

Les Figs. 3 et 4 montrent, schématiquement, chacune une manière de réaliser l'invention par comparaison de deux grandeurs correspondant aux membres de formes de l'inéquation 6.

Les Figs. 5 et 6 montrent, schématiquement, chacune une manière de réaliser l'invention par comparaison de deux grandeurs correspondant aux membres de formes de l'inéquation 7.

Les Figs. 7, 8 et 9, montrent chacune l'écran vu de face d'un dispositif manométrique des Figs. 1, 4 et 6, respectivement.

La Fig. 10 montre l'écran vu de face d'un autre dispositif manométrique des Figs. 1, 4 et 6.

La Fig. 11 montre, schématiquement, une variante de raccordement d'éléments des Figs. 1, 3 et 5.

La Fig. 12 montre, schématiquement, une variante du raccordement de la pompe des Figs. 3 à 6.

## Manières de réaliser l'invention

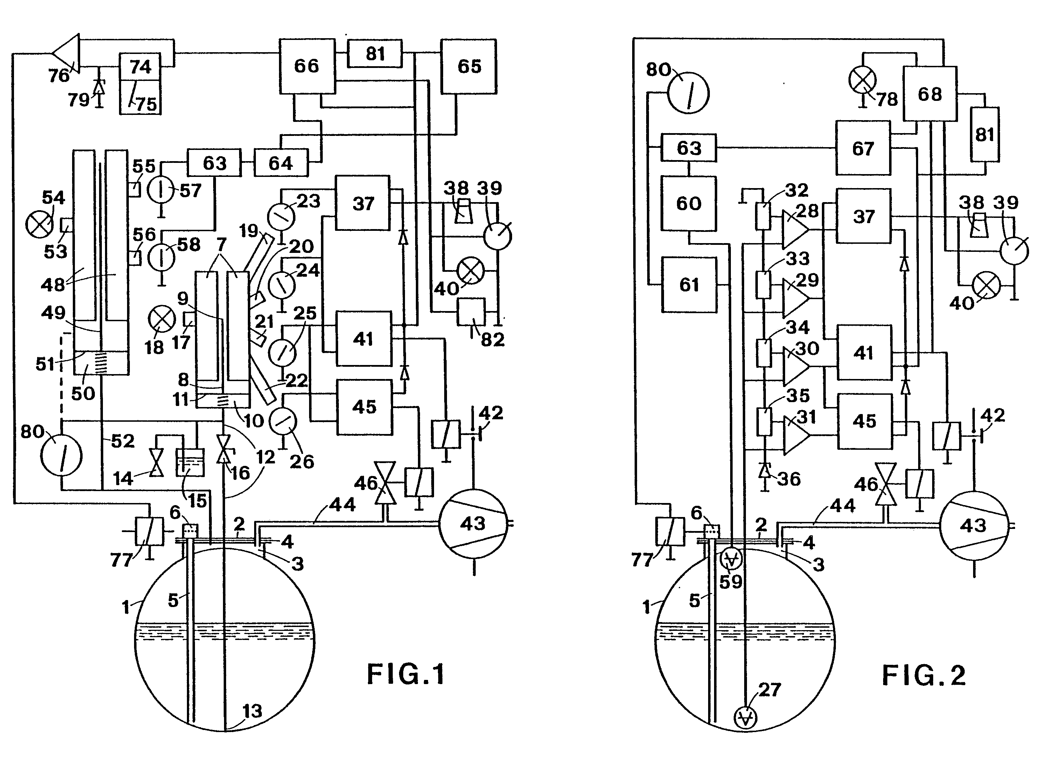

Le réservoir 1 représenté dans chacune des Figs. 1 à 6 est hermétiquement fermé par son couvercle 2 boulonné au rebord du trou d'homme 3 avec compression du joint d'herméticité 4 et par le bouchon 6 du tube de remplissage 5.

La soupape permettant l'expulsion du volume de gaz correspondant à la quantité de substance introduite par remplissage ainsi que les conduites de soutirage de la substance ne sont pas représentées.

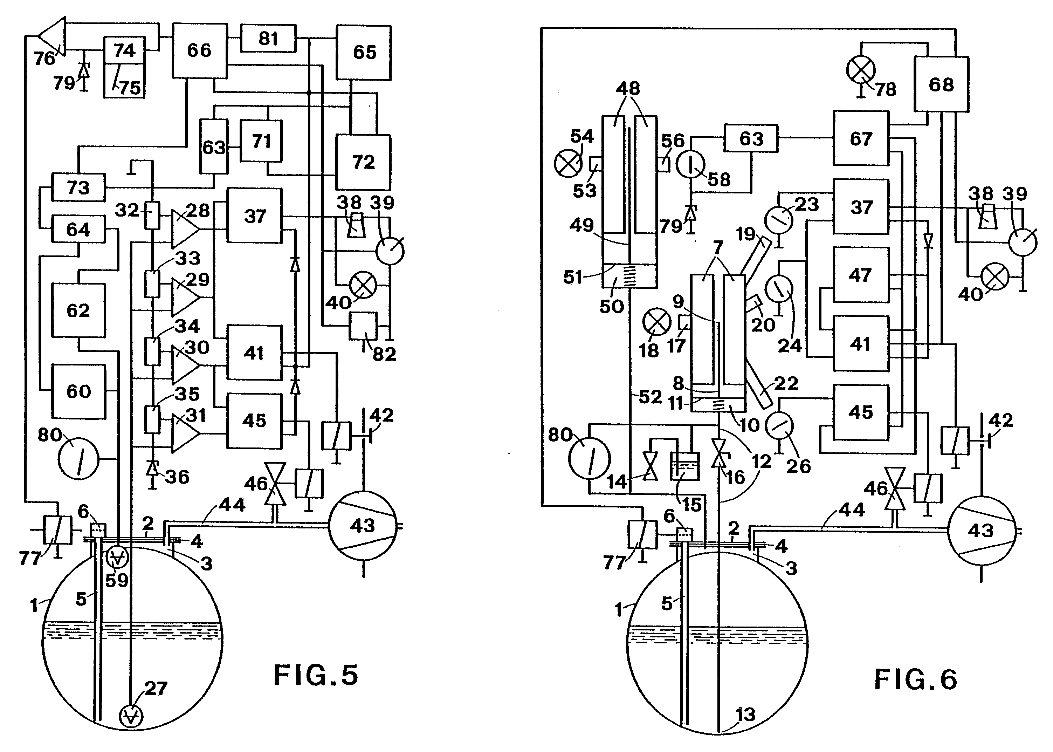

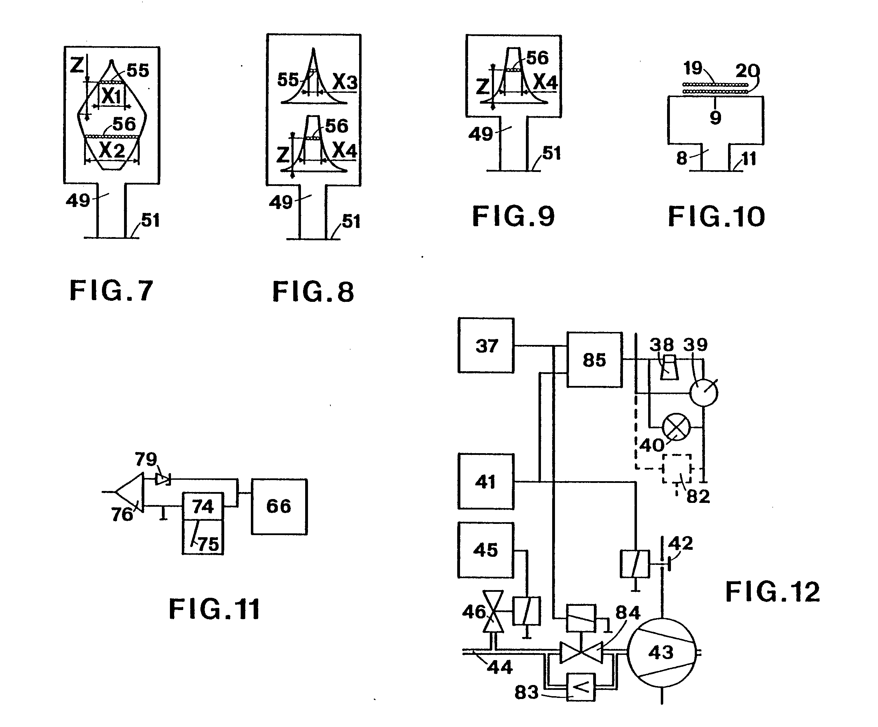

Le dispositif 7 à câbles en fibres optiques des Figs. 1, 4 et 6, est décrit dans les fascicules de brevet CH 645 733 A5 et EP 0 023 902 B1 et la disposition de l'arête 9 de son écran 8 par rapport aux extrémités aplaties des câbles 19 et 20, celles des câbles 21 (sauf pour la Fig. 6) et 22 étant cachées par l'écran 8, est en outre montrée dans la Fig. 10.

L'écran 8 du dispositif 7 est relié à la membrane 11 du manomètre 10 qui mesure la dépression à l'extrémité 13 de la canalisation 12, laquelle comprend une faible fuite de gaz au moyen de la buse 14, que le témoin à bulles 15 permet de contrôler optiquement, afin d'être en permanence exempte de substance jusqu'à son extrémité 13, ainsi qu'une vanne à flotteur 16.

Le câble 17 du dispositif 7 capte la lumière de la source lumineuse 18. La propagation de la lumière entre le câble 17 et les câbles 19, 20, 21 (sauf dans la Fig. 6) et 22, est contrôlée par la position de l'arête 9 de l'écran 8 suivant la valeur de la dépression d au bas du réservoir 1.

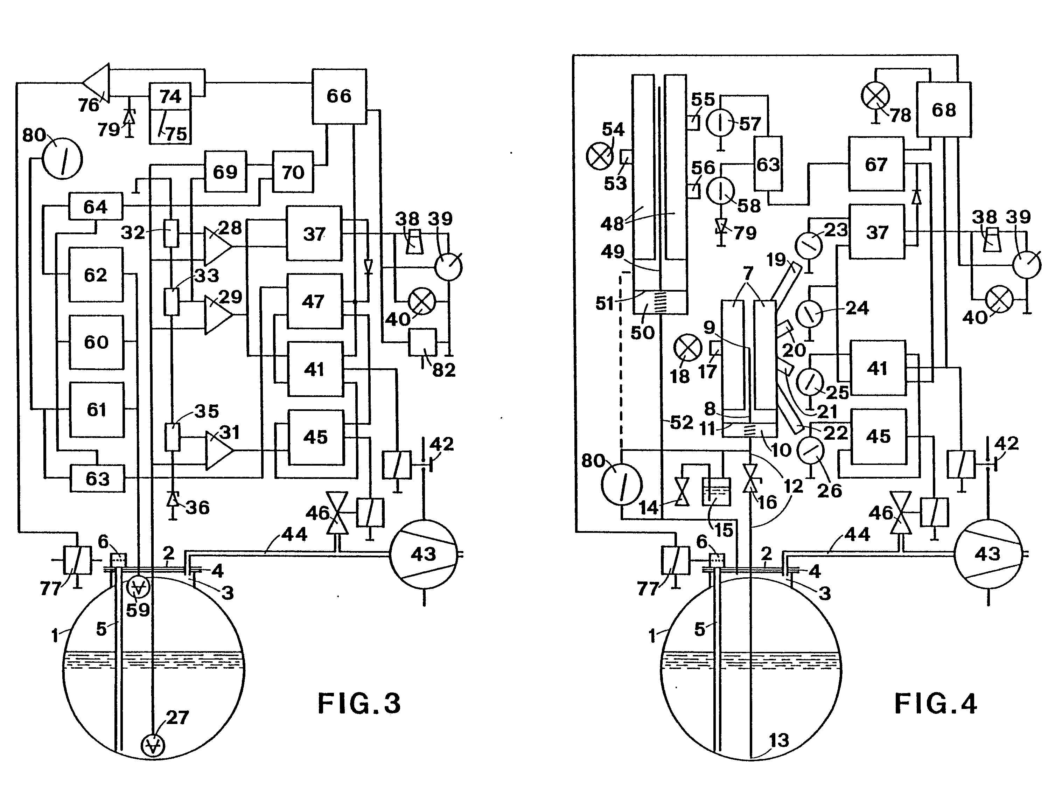

Dans les cas selon les Figs. 2, 3 et 5, la tension, proportionnelle à la dépression mesurée, du capteur 27 est transmise aux comparateurs 28, 29, 30 (sauf dans la Fig. 3) et 31, qui la comparent, respectivement, à celles des curseurs des potentiomètres 32, 33, 34 (sauf dans la Fig. 3) et 35, raccordés en diviseurs de la tension stable du générateur 36.

Les cellules photo-électriques 23, 24, 25 (sauf dans la Fig. 6) et 26, sont successivement excitées par la lumière qu'elles reçoivent, respectivement, des câbles 19, 20, 21 (sauf dans la Fig. 6) et 22, et de même les sorties des comparateurs 28, 29, 30 (sauf dans la Fig. 3) et 31, sont successivement sous tension lorsque la dépression d au bas du réservoir 1 est successivement supérieure aux valeurs $d_0$, $d_1$, $d_2$ (sauf pour les Fig. 3 et 6) et $d_3$, respectivement, et, inversement, leurs tensions sont successivement nulles lorsque la dépression d est successivement inférieure aux mêmes valeurs respectives.

L'extrémité 13 de la canalisation 12 des Figs. 1, 4 et 6, et le capteur 27 des Figs. 2, 3 et 5, sont situés, de préférence, au bas du réservoir 1, sinon il doit être tenu compte du produit de leur hauteur par rapport au bas du réservoir 1 et du poids spécifique $\gamma$ de la substance.

Si la dépression d est inférieure à la valeur $d_0$, la bascule 37, commandée, suivant le cas, par la cellule 23 ou par le comparateur 28, alimente en tension l'avertisseur sonore 38, à moins que la minuterie 39 soit en fonctionnement, et l'avertisseur optique 40, la bascule 41, commandée, suivant le cas, par la cellule 24 ou par le comparateur 29, commande, par l'intermédiaire du contacteur 42, la pompe à membrane 43 qui est en fonctionnement et aspire le gaz du réservoir 1 par la canalisation 44 et la vanne 46, commandée par la bascule 45, est fermée.

Cette situation est présente à la mise en service de l'installation, pendant le rétablissement de la dépression après remplissage du réservoir 1 ou si le débit de gaz dû à une fuite trop grande est supérieur au débit de la pompe 43.

Si c'est la dernière raison évoquée, le signalisateur restera dans cet état d'alarme jusqu'à la vidange du réservoir 1.

Sinon, la dépression d atteint la valeur $d_0$ puis la valeur $d_1$ de sorte que la bascule 37, commandée, suivant le cas, par la cellule 24 ou par le comparateur 29, change d'état, cesse d'alimenter les avertisseurs sonore 38 et optique 40, et, dans les cas selon les Figs. 3 et 6, par une impulsion positive, déclenche la minuterie 47, laquelle, après l'écoulement du temps qu'elle mesure, commande le changement d'état de la bascule 41 qui commande alors l'arrêt de la pompe 43.

Dans les cas selon les Figs. 1, 2, 4 et 5, la dépression d atteint encore la valeur $d_2$ de sorte que la bascule 41, commandée, suivant le cas, par la cellule 25 ou par le comparateur 30, change d'état et commande l'arrêt de la pompe 43.

Si les soutirages de substance font encore augmenter la dépression d jusqu'à la valeur $d_3$, la bascule 45, commandée, suivant le cas, par la cellule 26 ou par le comparateur 31, change d'état, commande l'ouverture de la vanne 46 et, dans les cas selon les Figs. 3 et 6, l'arrêt de la minuterie 47 pour que la pompe 43, éventuellement encore en fonctionnement, soit arrêtée.

Dans les cas selon les Figs. 1, 2 et 5, la dépression d diminue jusqu'à la valeur $d_2$ de sorte que la bascule 45, commandée, suivant le cas, par la cellule 25 ou par le comparateur 30, change d'état et commande la fermeture de la vanne 46, et le même cycle recommence.

Dans les cas selon les Figs. 3, 4 et 6, la dépression d diminue jusqu'à la valeur $d_1$ de sorte que la bascule 41, commandée, suivant le cas, par la cellule 24 ou par le comparateur 29, change d'état et commande, d'une part, le fonctionnement de la pompe 43, et, d'autre part, par une impulsion négative, le changement d'état de la bascule 45 qui commande alors la fermeture de la vanne 46, et encore, dans les cas selon les Figs. 3 et 6, par une impulsion positive, déclenche la minuterie 47, et le même cycle recommence.

Si les soutirages de substance ne font pas augmenter la dépression d, celle-ci diminue après l'arrêt de la pompe 43 jusqu'à la valeur $d_1$ de sorte que la bascule 41, commandée, suivant le cas, par la cellule 24 ou le comparateur 29, change d'état, commande le fonctionnement de la pompe 43 et, dans les cas selon les Figs. 3 et 6 déclenche la minuterie 47, et le même cycle recommence.

Si le débit de gaz dû à une fuite trop grande est supérieur au débit de la pompe 43, la dépression d devient plus faible que la valeur $d_1$ et, lorsqu'elle atteint la valeur $d_0$, la bascule 37, commandée, suivant le cas, par la cellule 23 ou par le comparateur 28, change d'état et alimente en tension les avertisseurs sonore 38 et optique 40.

Le dispositif 48 à câbles en fibres optiques des Figs. 1, 4 et 6, est décrit dans les fascicules de brevet CH 645 733 A5 et EP 0 023 902 B1 déjà cités.

Son écran 49 est relié à la membrane 51 du manomètre 50 qui mesure la dépression D dans le volume gazeux du réservoir 1, laquelle lui est transmise par la canalisation 52.

Le facteur de proportionnalité entre le déplacement Z de l'écran 49 et la dépression D a pour valeur $e = (D - d)/Z$.

Le câble 53 du dispositif 48 capte la lumière de la source lumineuse 54. Les quantités de lumière transmises par le câble 53 aux câbles 55 (sauf dans la Fig. 6) et 56 sont réglées par la position de fenêtre(s) percée(s) dans l'écran 49 et les réponses des cellules photo-électriques 57 (sauf dans la Fig. 6) et 58 sont proportionnelles aux quantités de lumière qu'elles reçoivent, respectivement, des câbles 55 (sauf dans la Fig. 6) et 56.

Les longueurs des extrémités aplaties des câbles 53, 55 (sauf pour la Fig. 6) et 56, ont pour valeur L.

Le réservoir 1 dans les cas selon les Figs. 1 et 4 est de forme cylindrique de rayon r disposé horizontalement ; il peut être de forme quelconque dans le cas selon la Fig. 6.

L'écran 49 de la Fig. 1 est montré dans la Fig. 7. La partie supérieure, de largeurs successives $X_1$, relative au câble 55, de la double fenêtre correspond au volume gazeux V du réservoir 1 par l'équation suivante :

6

$$X_1 = L \times \frac{\alpha - \sin \alpha}{2\pi} \quad \text{avec} \quad \cos \frac{\alpha}{2} = \frac{eZ}{\gamma r} - 1$$

et par de légères corrections pour tenir compte des volumes gazeux supplémentaires dans les parties hémisphériques aux extrémités du réservoir 1 et dans son trou d'homme 3 ; la partie inférieure, de largeurs successives $X_2$, relative au câble 56 correspond à la racine carrée de la dépression D par l'équation suivante :

$$X_2 = L \times \sqrt{\frac{eZ + d}{2r\gamma + d}}$$

L'écran 49 de la Fig. 4 est montré dans la Fig. 8. La fenêtre supérieure, de largeurs successives $X_3$, relative au câble 55, correspond au quotient du volume gazeux V du réservoir 1 divisé par la racine carrée de la dépression D par l'équation suivante :

$$X_3 = L \times \frac{\alpha - \sin \alpha}{2\pi} \times \sqrt{\frac{d}{eZ + d}} \quad \text{avec} \quad \cos \frac{\alpha}{2} = \frac{eZ}{\gamma r} - 1$$

et par de légères corrections comme dans le cas selon la Fig. 1. La fenêtre inférieure, de largeurs successives $X_4$, relative au câble 56, correspond au quotient du débit $Q_p$ de la pompe 43 divisé par la racine carrée de la dépression D par l'équation suivante :

$$X_4 = L \times \frac{D_m - (eZ + d)}{D_m - d} \times \sqrt{\frac{d}{eZ + d}}$$

L'écran 49 de la Fig. 6, montré dans la Fig. 9, est percé d'une seule fenêtre identique à la fenêtre inférieure du cas selon la Fig. 4.

Le réservoir 1 dans les cas selon les Figs. 2 et 3 est de forme sphérique de rayon r ; il peut être de forme quelconque dans le cas selon la Fig. 5.

Dans les cas selon les Figs. 2, 3 et 5, la tension du capteur 59, proportionnelle à la dépression D dans le volume gazeux du réservoir 1, est transmise au calculateur 60 de la racine carrée de cette dépression D, au calculateur 61 (sauf dans la Fig. 5) de ce volume gazeux V selon la formule suivante :

$$\frac{\pi}{3} \left( r + \frac{D - d}{\gamma} \right) \left( 2r - \frac{D - d}{\gamma} \right)^2 + v$$

v étant le volume du trou d'homme 3, et au calculateur 62 (sauf dans la Fig. 2) du débit $Q_p = Q_m(D_m - D)/D_m$ de la pompe 43 ; les tensions de sortie de ces calculateurs sont proportionnelles aux grandeurs calculées.

Dans le cas selon la Fig. 1, le circuit diviseur 63 divise la tension, proportionnelle au volume gazeux V, que lui transmet la cellule 57 par la tension, proportionnelle à la racine de la dépression D, que lui transmet la cellule 58 et le circuit diviseur 64 divise la tension, proportionnelle au quotient $v/\sqrt{D}$, que lui transmet le circuit diviseur 63 par la tension proportionnelle au temps mesuré par le compteur 65.

Lorsque la dépression d atteint la valeur $d_2$, la bascule 41, commandant l'arrêt de la pompe 43, ou la bascule 45, commandant la fermeture de la vanne 46, par une impulsion positive, arme la gachette de commande de la mémoire 66 et annule la mesure du compteur 65 qui mesure alors le temps $t_1$ d'arrêt de la pompe 43 jusqu'à ce que la dépression d atteigne la valeur $d_1$ et que la bascule 41, commandant le fonctionnement de la pompe 43, commande, par une impulsion négative, la mémoire 66 qui stocke à cet instant la tension, proportionnelle au quotient de quotient $(V/\sqrt{D})(t_1/\Delta_d)$, $\Delta_d$ étant égal à $d_2 - d_1$, à la sortie du circuit diviseur 64.

Dans le cas selon la Fig. 2, le circuit diviseur 63 divise la tension, proportionnelle au volume gazeux V, que lui transmet le calculateur 61 par la tension, proportionnelle à la racine de la dépression D, que lui transmet le calculateur 60 et transmet à la minuterie 67 une tension proportionnelle au quotient $V/\sqrt{D}$.

Lorsque la dépression d atteint la valeur $d_2$, la bascule 41, commandant l'arrêt de la pompe 43, ou la bascule 45, commandant la fermeture de la vanne 46, par une impulsion positive, déclenche la minuterie 67 qui mesure alors un temps égal à $(\Delta_d/kA) \times (V/\sqrt{D})$, $\Delta_2$ étant égal à $d_2 - d_1$, et durant lequel elle libère la gachette de commande de la bascule 68.

Si la dépression d atteint la valeur $d_1$ avant l'arrêt de la minuterie 67, la bascule 41, commandant le fonctionnement de la pompe 43, déclenche la bascule 68 dont la gachette de commande est encore libérée.

Dans le cas selon la Fig. 3, le même circuit diviseur 63 que celui de la Fig. 2 effectue la même division

7

et transmet à la minuterie 47 une tension proportionnelle au quotient $V/\sqrt{D}$, le circuit diviseur 64 divise la tension, proportionnelle au débit $Q_p$ de la pompe 43, que lui transmet le calculateur 62 par la tension, proportionnelle à la racine de la dépression D, que lui transmet le calculateur 60 et le circuit soustracteur 69, mesurant la différence de tension entre celle, proportionnelle à la dépression d, du capteur 27 et celle du curseur du potentiomètre 33, lequel curseur est à la même tension que celle du capteur 27 quand la dépression d a pour valeur $d_1$, transmet une tension proportionnelle à cette différence de dépression au second circuit soustracteur 70 qui en mesure la différence avec la tension, proportionnelle au quotient $Q_p/\sqrt{D}$, que lui transmet le circuit diviseur 64.

Lorsque la dépression d atteint la valeur $d_1$, la bascule 37, cessant d'alimenter les avertisseurs sonore 38 et optique 40, ou la bascule 41, commandant le fonctionnement de la pompe 43, par une impulsion positive, arme la gachette de commande de la mémoire 66 et déclenche la minuterie 47 qui, après avoir mesuré un temps $t_2 = cV/\sqrt{D}$, c étant un facteur constant inférieur au minimum de la fonction $(d_3-d_1)\sqrt{D}/Q_p$, commande le changement d'état de la bascule 41, laquelle commande l'arrêt de la pompe 43, et par une impulsion négative, la mémoire 66 qui stocke à cet instant la tension, proportionnelle à la différence $(Q_p/\sqrt{D}) - (\Delta_d/c)$, à la sortie du circuit soustracteur 70, $\Delta_d$ étant la différence de dépression proportionnelle audit instant à la mesure du circuit soustracteur 69.

Dans le cas selon la Fig. 4, le circuit diviseur 63 divise la tension, proportionnelle au quotient $V/\sqrt{D}$, que lui transmet la cellule 57 par la tension, proportionnelle à la différence $(Q_p/\sqrt{D}) - kA$, du circuit de la cellule 58 et du générateur 79 raccordés en série, dont les tensions sont respectivement proportionnelles à $Q_p/\sqrt{D}$ et à la grandeur kA, et transmet à la minuterie 67 une tension proportionnelle au quotient $(V/\sqrt{D})/((Q_p/\sqrt{D}) - kA)$.

Lorsque la dépression d atteint la valeur $d_1$, la bascule 37, cessant d'alimenter les avertisseurs sonore 38 et optique 40, ou la bascule 41, commandant le fonctionnement de la pompe 43, par une impulsion positive, déclenche la minuterie 67 qui mesure alors un temps égal à $\Delta_d(V/\sqrt{D})/((Q_p/\sqrt{D}) - kA)$, $\Delta_d$ étant égal à $d_2 - d_1$, et durant lequel elle empêche le déclenchement de la bascule 68 ; la gachette de déclenchement de la bascule 68 comprend une temporisation d'une durée supérieure au temps de déclenchement de la minuterie 67.

Si, lorsque la minuterie 67 s'arrête de fonctionner et libère la gachette de commande de la bascule 68, la bascule 41 commande encore le fonctionnement de la pompe 43, la bascule 41 déclenche la bascule 68.

Dans le cas selon la Fig. 5, le même circuit diviseur 64 que celui de la Fig. 3 effectue la même division, le circuit diviseur 63 divise la tension à la sortie du compteur 65 par la tension à la sortie du circuit additionneur 71, lequel effectue la somme des tensions aux sorties du compteur 65 et de la mémoire 72, et le circuit multiplicateur 73 effectue le produit de la tension, proportionnelle au quotient $Q_p/\sqrt{D}$, à la sortie du circuit diviseur 64 et de la tension à la sortie du circuit diviseur 63.

Lorsque la dépression d atteint la valeur $d_2$, la bascule 41, commande l'arrêt de la pompe 43, ou la bascule 45, commandant la fermeture de la vanne 46, par une impulsion positive, arme la gachette de commande de la mémoire 66 et annule la mesure du compteur 65 qui mesure alors le temps $t_1$ d'arrêt de la pompe 43 jusqu'à ce que la dépression d atteigne la valeur $d_1$ et que la bascule 41, commandant le fonctionnement de la pompe 43, commande, par une impulsion négative, la mémoire 72 qui stocke à cet instant la tension, proportionnelle au temps $t_1$, à la sortie du compteur 65 dont la mesure est à nouveau annulée de sorte qu'il mesure maintenant le temps $t_2$ de fonctionnement de la pompe 43 jusqu'à ce que la dépression d atteigne à nouveau la valeur $d_2$ et que la bascule 41, commandant à nouveau l'arrêt de la pompe 43, commande, par une impulsion positive, la mémoire 66 (la polarité de commande de cette mémoire est inversée par rapport à celle des Figs. 1 et 3) et réarme sa gachette de commande, puis annule à nouveau la mesure du compteur 65 et le même cycle recommence ; la gachette de commande du compteur 65 par laquelle sa mesure est annulée comprend une temporisation d'une durée supérieure au temps des opérations de stockage des mémoires 66 et 72.

A l'instant où la dépression d a à nouveau atteint la valeur $d_2$, la tension à la sortie du circuit additionneur 71 est proportionnelle à la somme des temps $t_1$ et $t_2$, la tension à la sortie du circuit diviseur 63 est proportionnelle au quotient $t_2/(t_1 + t_2)$ et la tension à la sortie du circuit multiplicateur 73, stockée audit instant par la mémoire 66, est proportionnelle au produit de quotients $(t_2/(t_1 + t_2)) \times Q_p/\sqrt{D}$.

Dans le cas selon la Fig. 6, le circuit diviseur 63 divise, par la tension, proportionnelle à la grandeur kA, du générateur 79, la tension, proportionnelle à la différence $kA - Q_p/\sqrt{D}$, du circuit du générateur 79 et de la cellule 8=58 dont la tension est proportionnelle à $Q_p/\sqrt{D}$, raccordés en série, et transmet à la minuterie 67 une tension proportionnelle au quotient $(kA - Q_p/\sqrt{D})/kA$.

Lorsque la dépression d atteint la valeur $d_1$, la bascule 37, cessant d'alimenter les avertisseurs sonore 38 et optique 40, ou la bascule 41, commandant le fonctionnement de la pompe 43, déclenche la minuterie 47 qui, après avoir mesuré un temps $t_2$ constant et inférieur au minimum de la fonction $(d_3 - d_1)V/Q_p$, commande le changement d'état de la bascule 41, laquelle commande l'arrêt de la pompe 43 et déclenche, par une impulsion positive, la minuterie 67 qui mesure alors un temps égal à $t_2((Q_p/\sqrt{D})-kA)/kA$ et durant lequel elle libère la gachette de commande de la bascule 68.

Si la dépression d atteint à nouveau la valeur $d_1$ avant l'arrêt de la minuterie 67, la bascule 41, commandant le fonctionnement de la pompe 43, déclenche la bascule 68 dont la gachette de commande est encore libérée.

Afin d'éviter un déclenchement intempestif de la bascule 68 si les soutirages de substance font augmenter la dépression d jusqu'à la valeur $d_3$, la bascule 45, commandant l'ouverture de la vanne 46, commande l'arrêt de la minuterie 67 éventuellement encore en fonctionnement.

Dans les cas selon les Figs. 1, 3 et 5, la mémoire 66, jusqu'à ce qu'elle soit à nouveau commandée par la bascule 41, transmet la tension qu'elle a stockée à l'amplificateur 76, à entrées différentielles, qui compare cette tension à celle, proportionnelle à la grandeur kA, du générateur 79 et au galvanomètre 74, à position d'équilibre médiane, qui mesure algébriquement la différence entre ces deux tensions.

La Fig. 11 montre que la position d'équilibre du galvanomètre 74 peut aussi être à l'une de ses butées, le galvanomètre 74 mesurant alors la tension à la sortie de la mémoire 66, et que le générateur 79 peut aussi être disposé entre la mémoire 66 et l'amplificateur 76.

L'aiguille 75, commandée par le galvanomètre 74, indique, en comparant sa position par rapport à un repère, que le taux de fuite est trop grand pour un nouveau remplissage du réservoir 1 et l'amplificateur 76 commande le dispositif 77 verrouillant le bouchon 6 du tube de remplissage 5 si, en valeurs absolues, la tension stockée par la mémoire 66 est plus grande que la tension proportionnelle à la grandeur kA.

L'écart entre l'aiguille 75 et ledit repère est proportionnel à la différence entre le taux de fuite maximal pouvant être atteint après remplissage du réservoir 1 et la limite de ce taux maximal pour un nouveau remplissage.

Les Figs. 1, 3 et 5, correspondent, respectivement, avec leur variante selon la Fig. 11, à l'une ou l'autre des inéquations 5 ou 9, 6 ou 12 et 7 ou 15, selon qu'il s'agit de la comparaison effectuée par l'amplificateur 76 ou au moyen de l'aiguille 75 et dudit repère.

Dans les cas selon les Figs. 2, 4 et 6, la bascule 68 est en état de repos à la mise sous tension du signalisateur et reste en état de travail lorsqu'elle a été déclenchée par la bascule 41, ne pouvant revenir à son état de repos que par interruption de son alimentation en tension.

Le dispositif 77, commandé par la bascule 68, verrouille constamment le bouchon 6 du tube de remplissage 5, ce qui oblige de déclencher la minuterie 39 pour pouvoir enlever ce bouchon 6.

Lorsque le changement d'état de la bascule 68 a été déclenché, elle alimente en tension le témoin de fuite 78 et ne peut plus commander le dispositif 77 de sorte que le bouchon 6 reste verrouillé.

Dans les cas selon les Figs. 2 et 6, la minuterie 67 mesure le temps minimal d'arrêt de la pompe 43 et, dans le cas selon la Fig. 4, son temps maximal de fonctionnement, ces temps correspondant au taux de fuite maximal pour un nouveau remplissage du réservoir 1, de sorte que la bascule 68 est déclenchée si le temps $t_1$ d'arrêt de la pompe 43, dans les cas selon les Figs. 2 et 6, est trop court ou si son temps $t_2$ de fonctionnement, dans le cas selon la Fig. 4, est trop long, les temps $t_1$ et $t_2$ étant ainsi comparés à leurs limites respectives ; ces cas correspondent, respectivement, aux inéquations 11, 16 et 14.

La minuterie 67 peut aussi, comme la minuterie 47 des Figs. 3 et 6, après l'écoulement du temps $t_1$ d'arrêt de la pompe 43, dans le cas selon la Fig. 2, ou de son temps $t_2$ de fonctionnement, dans le cas selon la Fig. 4, qu'elle mesure, commander la bascule 41 pour que celle-ci commande, respectivement, le fonctionnement de la pompe 43 ou son arrêt, les écarts de dépression $\Delta_d$ correspondant à ces temps étant alors variables, la valeur $d_2 - d_1$ de ces écarts étant, respectivement, le maximum ou le minimum correspondant au taux de fuite maximal pour un nouveau remplissage du réservoir 1 et leur atteinte entraînant le déclenchement de la bascule 68 par la bascule 41, les écarts de dépression $\Delta_d$ étant ainsi comparés à leurs limites ; ces cas correspondent, respectivement, aux inéquations 10 et 13.

Dans le cas selon la Fig. 5, sont successivement mesurés le temps $t_1$ d'arrêt de la pompe 43 puis le temps $t_2$ de son fonctionnement ; il est aussi possible de mesurer d'abord le temps $t_2$ et ensuite le temps $t_1$, simplement en inversant les polarités d'armement de la gachette de commande de la mémoire 66, de sa gachette de commande et de celle de la mémoire 72, qui stocke alors le temps $t_2$, et en raccordant, à sa sortie, l'entrée du circuit diviseur 63 raccordée à la sortie du compteur 65.

Le processus des temps $t_1$ et $t_2$ peut évidemment être aussi inversé dans le cas selon la Fig. 6.

Les deux types de dispositif 77 de verrouillage du bouchon 6 peuvent être intervertis entre les Figs. 1, 3 et 5, et les Figs. 2, 4 et 6, respectivement, en inversant les raccordements aux entrées de l'amplificateur 76 qui comprend alors une gachette de commande par la minuterie 39 et en raccordant le dispositif 77 en parallèle au témoin de fuite 78 alimenté par la bascule 68.

Ces dispositifs 77 peuvent aussi commander, au lieu du verrouillage du bouchon 6, celui de l'accès à cet orifice de remplissage du réservoir 1.

Dans les Figs 1, 3, 5 et 11, un témoin de fuite 78 peut être raccordé à la sortie de l'amplificateur 76.

Un dispositif 77, l'aiguille 75 commandée par le galvanomètre 74 des Figs. 1, 3, 5 et 11, ou un témoin de fuite 78, est suffisant pour indiquer si le taux de fuite est trop grand pour un nouveau remplissage du réservoir 1.

Dans les cas selon les Figs. 1, 2 et 5, afin d'éviter qu'une fuite accidentelle ne puisse être détectée que par le changement d'état de la bascule 37 après que la dépression d ait atteint la valeur $d_0$ au terme d'un temps pouvant être extrêmement long, il est préférable d'ajouter la minuterie 81, laquelle, déclenchée par une impulsion négative de la bascule 37 cessant d'alimenter en tension les avertisseurs sonore 38 et optique 40 ou de la bascule 41 commandant le fonctionnement de la pompe 43, après l'écoulement du temps qu'elle mesure, déclenche la bascule 68 de la Fig. 2 et stocke dans la mémoire 66 des Figs. 1 et 5 une tension correspondant au maximum du taux de fuite que peut indiquer l'aiguille 75 du galvanomètre 74 ; la durée de cette minuterie 81 doit être supérieure au maximum de la fonction

$(d_2 - d_1) \times V/(Q_p - kA\sqrt{D})$, $kA\sqrt{D}$ ayant pour valeur, dans les cas selon les Figs. 1 et 5, ledit maximum du taux de fuite.

Pendant sa durée de fonctionnement, la minuterie 39 empêche le déclenchement de la bascule 68 des Figs. 2, 4 et 6, et, dans les cas selon les Figs. 1, 3 et 5, aussi, pendant le fonctionnement de l'appareillage de soutirage de la substance, le dispositif de commutation 82, commandé par ledit appareillage, désarment la gachette de commande de la mémoire 66 et empêchent sa commande.

Afin d'accélérer le processus de détermination du taux de fuite, l'arrêt de l'appareillage de soutirage de la substance peut, au moyen d'un générateur d'impulsions, non représenté, commander la bascule 45 des Figs. 1 à 6 pour qu'elle commande l'ouverture de la vanne 46 et la bascule 41 pour qu'elle commande, dans les cas selon les Figs. 1, 2 et 5, le fonctionnement de la pompe 43, l'une seulement de ces deux bascules pouvant changer d'état, et, dans le cas selon la Fig. 4, l'arrêt de la pompe 43 ; dans les cas selon les Figs. 3 et 6, si la pompe 43 est en fonctionnement, la bascule 45, commandant l'ouverture de la vanne 46, commande l'arrêt de la minuterie 47, laquelle commande alors le changement d'état de la bascule 41 qui commande ainsi l'arrêt de la pompe 43.

La commande manuelle d'un tel générateur d'impulsions constitue un moyen de test.

Si la pompe 43 est de grand débit $Q_p$ comparativement au plus grand débit $Q_f$ de gaz, le circuit additionneur 71 peut être supprimé dans le cas selon la Fig. 5 en raccordant l'entrée, raccordée à sa sortie, du circuit diviseur 63 directement à la sortie de la mémoire 72 et, dans le cas selon la Fig. 6, le générateur 79 et le circuit diviseur 63 peuvent être supprimés en raccordant la cellule 58 directement au potentiel commun et à la minuterie 67 ; ces cas selon les Figs. 5 et 6 correspondent alors, respectivement, aux inéquations 8 ou 17 et 18.

Si la dépression maximale $D_m$ à l'entrée de la pompe 43 est suffisamment faible de sorte que la variation du débit de pompage $Q_p$ est pratiquement proportionnelle à celle de la fonction $1/\sqrt{D}$, le terme $Q_p$ devenant $aQ_m/D_m\sqrt{D}$ ou le quotient $Q_p/\sqrt{D}$ devenant $aQ_m/D_mD$ dans les inéquations 6 à 8 et 12 à 18, le calculateur 62 dans les cas selon les Figs. 3 et 5 et le calculateur 60 dans le cas selon la Fig. 5 peuvent être supprimés en raccordant le circuit diviseur 64, calculant alors l'inverse $1/D$, uniquement au capteur 59 au lieu d'au calculateur 60, et, dans les cas selon les Figs. 4 et 6, la forme de la fenêtre de l'écran 49 relative au câble 56 peut correspondre à l'équation suivante : $X_4 = L \times d/(eZ + d)$.

La pompe 43 des Figs. 1 à 6 peut évidemment être d'un autre genre qu'une pompe à membrane en adaptant, à son débit et à sa variation suivant celle de la dépression $D$, le calcul effectué par le calculateur 62 dans les cas selon les Figs. 3 et 5 ainsi que l'équation et la forme de la fenêtre de l'écran 49 relative au câble 56 dans les cas selon les Figs. 4 et 6.

La Fig. 12 montre un élément 83 disposé devant l'entrée de la pompe 43 des Figs. 3 à 6, le genre de pompe utilisée étant alors indifférent.

Cet élément 83 peut être constitué d'une buse de section $A'$ et d'un volume suffisant à stabiliser la dépression entre cette buse et l'entrée de la pompe 43, le calcul du débit de pompage $Q_p$ effectué par le calculateur 62, dans les cas selon les Figs. 3 et 5, ayant alors pour expression $k'A'\sqrt{D_m - D}$ et la forme de la fenêtre de l'écran 49 relative au câble 56, dans les cas selon les Figs. 4 et 6, ayant alors pour équation :

$$X_4 = L \times \sqrt{\frac{D_m - (eZ + d)}{D_m - d}} \times \sqrt{\frac{d}{eZ + d}}$$

L'élément 83 de la Fig. 12 peut aussi être un régulateur maintenant la dépression à l'entrée de la pompe 43 et son débit de pompage $Q_p$ constants en supprimant le calculateur 62 dans les cas selon les Figs. 3 et 5, le circuit diviseur 64, calculant alors l'inverse $1/\sqrt{D}$, étant raccordé uniquement à la sortie du calculateur 60, et, dans les cas selon les Figs. 4 et 6, la forme de la fenêtre de l'écran 49 relative au câble 56 ayant alors pour équation :

$$X_4 = L \times \sqrt{d}/\sqrt{eZ + d}.$$

Pendant le rétablissement de la dépression après remplissage du réservoir 1 ou lorsque la dépression $d$ devient inférieure à la valeur $d_0$, l'effet de l'élément 83 de la Fig. 12 est supprimé au moyen de la vanne 84 commandée par la bascule 37 pour qu'elle s'ouvre lorsque la dépression $d$ devient inférieure à la valeur $d_0$ et se ferme lorsque la dépression $d$ devient supérieure à la valeur $d_1$.

Afin d'éviter des intermittences du fonctionnement des avertisseurs sonore 38 et optique 40 lors d'une fuite importante au réservoir 1, ces avertisseurs 38 et 40 sont commandés par la bascule 85 déclenchée par la bascule 37 lorsque la dépression $d$ devient inférieure à la valeur $d_0$ et sa remise en état de repos commandée par la bascule 41 commandant l'arrêt de la pompe 43.

La bascule 37 des Figs. 1 à 6 et 12 peut commander une seconde pompe par l'intermédiaire d'un contacteur, les avertisseurs sonore 38 et optique 40 étant commandés, de préférence, par une bascule 85, comme précédemment décrit.

En disposant, dans la Fig. 5, un comparateur supplémentaire raccordé au capteur 27 et au curseur d'un potentiomètre supplémentaire raccordé entre les potentiomètres 33 et 34, la tension de ce curseur détermine, par rapport à la valeur $d_1$ ou $d_2$ de la dépression $d$, un écart de dépression $\Delta_d'$ ou $\Delta_d''$ et, ce

comparateur commandant un générateur délivrant, selon le processus de mesure des temps pendant l'arrêt et le fonctionnement de la pompe 43, une impulsion positive ou négative par laquelle il annule la mesure du compteur 65 ou commande la mémoire 66, le compteur 65 mesure ainsi les temps $t_1'$ et $t_2$ ou $t_1$ et $t_2'$, le temps $t_1$ ou $t_2$ correspondant à l'écart de dépression $d_2 - d_1$ et le temps $t_1'$ ou $t_2'$ à l'écart de dépression $\Delta_d'$ ou $\Delta_d''$, respectivement ; en disposant deux comparateurs et deux potentiomètres supplémentaires ainsi raccordés, les tensions des curseurs de ces potentiomètres déterminent des écarts de dépression $\Delta_d'$ et $\Delta_d''$ et, ces comparateurs commandant chacun un générateur, l'un d'une impulsion positive et l'autre d'une impulsion négative, le compteur 65 mesure ainsi les temps $t_1'$ et $t_2'$ correspondant à ces écarts de dépression $\Delta_d'$ et $\Delta_d''$, respectivement.

Afin d'adapter convenablement les tensions proportionnelles aux temps $t_1'$ et/ou $t_2'$, la tension à la sortie de la mémoire 72 est amplifiée ou réduite proportionnellement au rapport $\Delta_d'/\Delta_d$ ou $\Delta_d''/\Delta_d$ si elle stocke le temps $t_2$ ou $t_1$ et que l'autre temps mesuré est $t_1'$ ou $t_2'$, $\Delta_d/\Delta_d'$ ou $\Delta_d/\Delta_d''$ si elle stocke le temps $t_1'$ ou $t_2'$ et que l'autre temps mesuré est $t_2$ ou $t_1$, $\Delta_d$ étant égal à $d_2 - d_1$, ou encore $\Delta_d''/\Delta_d'$ ou $\Delta_d'/\Delta_d''$ si elle stocke le temps $t_1'$ ou $t_2'$, respectivement.

La Fig. 3 et les descriptions qui la concernent montrent comment déterminer une tension proportionnelle à un écart de dépression variable correspondant à un temps fixe ou variable ; cette méthode, appliquée aux cas selon la Fig. 5, permet encore de déterminer, au moyen d'un ou deux circuits soustracteurs 69, des tensions proportionnelles à des écarts de dépression $\Delta_d'$ et/ou $\Delta_d''$ variables correspondant à des temps $t_1 25$ et/ou $t_2 25$, respectivement, mesurés par une ou deux minuteries 47, et les tensions proportionnelles à ce ou ces écarts de dépression peuvent être stockées dans une ou deux mémoires commandées par cette ou ces minuteries.

Ces cas selon la Fig. 5 ainsi modifiée et ses variantes selon la Fig. 12 correspondent aux formes des inéquations 7 et 8 dans lesquelles les temps pendant l'arrêt et le fonctionnement de la pompe 43 ne correspondent pas à des écarts de dépression de même valeur, au moins une des deux tensions comparées au moyen de l'aiguille 75 du galvanomètre 74 et dudit repère et/ou par l'amplificateur 76 dépendant de ces écarts de dépression inégaux.

Les ensembles d'éléments mesurant les grandeurs variables avec la quantité de substance contenue dans le réservoir 1 peuvent être intervertis entre les Figs. 1 et 2, 3 et 4, 5 et 6.

La dépression d peut également être indifféremment mesurée au moyen d'un dispositif 7 à câbles en fibres optiques et de cellules photo-électriques comme le montrent les Figs. 1, 4 et 6, ou d'un capteur 27 et de comparateurs comme le montrent les Figs. 2, 3 et 5 ; un écart variable de la dépression d peut aussi être mesuré par une cellule photo-électrique dont la quantité de lumière qu'elle reçoit d'un câble supplémentaire est réglée par la position d'une fenêtre de forme triangulaire percée dans l'écran 8 d'un dispositif 7.

Les capteurs 27 et/ou 59 des Figs. 2, 3 et 5, peuvent être raccordés à des canalisations comme celles, respectivement, 12 et/ou 52 des Figs. 1, 4 et 6.

En rendant hermétique le dispositif 48 des Figs 1 et 4, le manomètre 50 peut mesurer la différence de dépression $D - d$, proportionnelle à la hauteur H de substance, entre les canalisations 52 et 12 ; le capteur 59 des Figs. 2 et 3 peut aussi être à mesure différentielle en le raccordant au bas du réservoir 1 par une canalisation comportant une faible fuite de gaz.

La hauteur H de substance peut aussi être mesurée, et la dépression D en être déduite, au moyen d'une jauge, par exemple à flotteur, manœuvrant, par l'intermédiaire d'un démultiplicateur, suivant le cas, l'écran 49 du dispositif 48 des Figs. 1, 4 et 6, ou le curseur d'un potentiomètre remplaçant le capteur 59 des Figs. 2, 3 et 5.

La vanne 46 peut être remplacée par une soupape raccordée à une canalisation comme celle 12 des Figs. 1, 4 et 6, et s'ouvrant par excès de la dépression d ; la bascule 45 peut ainsi être supprimée ainsi que, sauf dans les cas selon les Figs. 6 et 3, la cellule 26 ou le comparateur 31, lesquels, respectivement, sont alors raccordés à la bascule 41 parallèlement à la sortie de la minuterie 47.

Suivant l'utilisation du signalisateur, l'avertisseur sonore 38 et/ou l'avertisseur optique 40 peuvent être supprimés ainsi que, si ce sont ces deux éléments, la bascule 37 des Figs. 1 à 6 et la cellule 23 ou le comparateur 28.

Des éléments représentés schématiquement peuvent comprendre des dispositifs d'amplification ou de réduction et notamment de réglage des différentes tensions afin d'adapter convenablement leurs valeurs entre elles à celles des grandeurs physiques auxquelles elles correspondent.

Les impulsions positives et/ou négatives émises par les bascules 37, 41 et 45, peuvent être obtenues simplement au moyen de tores magnétiques, que ces bascules contiennent, munis de deux ou trois enroulements dont l'un d'eux est raccordé aux sorties de ces bascules.

L'indicateur de contenance 80 permet d'indiquer avec précision la quantité de substance contenue dans le réservoir 1.

La méthode utilisée dans les cas selon les Figs. 5 et 6 permet d'éviter la détermination du volume gazeux V du réservoir 1, laquelle n'est simple à effectuer que pour un réservoir dont les sections horizontales sont uniformes sur sa hauteur ; en plus, par sa supériorité technique, la conception selon la Fig. 5 et sa description constitue la meilleure manière de réaliser l'invention.

Il est évident que les réservoirs 1 des Figs. 1 à 4 peuvent être d'une autre forme en y adaptant les éléments qui en déterminent les volumes gazeux.

**EP 0 210 201 B1**

Possibilités d'application industrielle

Des signalisateurs selon la présente invention peuvent être appliqués à la détection de fuites notamment à des citernes à mazout ou à gasoil ainsi qu'à des réservoirs contenant d'autres substances dont les propriétés physiques sont compatibles avec une dépression à leurs surfaces, par exemple, dans les industries chimiques et alimentaires.

Ces signalisateurs peuvent aussi servir à mesurer le degré d'étanchéité de réservoirs sans y être raccordés à demeure.

Liste des numéros de référence des éléments des dessins

1 réservoir
2 couvercle
3 trou d'homme
4 joint
5 tube de remplissage
6 bouchon
7 dispositif à câbles en fibres optiques
8 écran
9 arête
10 manomètre
11 membrane
12 canalisation
13 extrémité
14 buse
15 témoin à bulles
16 vanne à flotteur
17 câble
18 source lumineuse
19 câble
20 câble
21 câble
22 câble
23 cellule
24 cellule
25 cellule
26 cellule
27 capteur
28 comparateur
29 comparateur
30 comparateur
31 comparateur
32 potentiomètre
33 potentiomètre
34 potentiomètre
35 potentiomètre
36 générateur
37 bascule
38 avertisseur sonore
39 minuterie
40 avertisseur optique
41 bascule
42 contacteur
43 pompe
44 canalisation
45 bascule
46 vanne
47 minuterie
48 dispositif à câbles en fibres optiques
49 écran
50 manomètre
51 membrane
52 canalisation
53 câble
54 source lumineuse

12

55 câble
56 câble
57 cellule
58 cellule
59 capteur
60 calculateur de $\sqrt{D}$
61 calculateur de V
62 calculateur de $Q_p$
63 circuit diviseur
64 circuit diviseur
65 compteur
66 mémoire
67 minuterie
68 bascule
69 circuit soustracteur
70 circuit soustracteur
71 circuit additionneur
72 mémoire
73 circuit multiplicateur
74 galvanomètre
75 aiguille
76 amplificateur
77 dispositif de verrouillage
78 témoin de fuite
79 générateur
80 indicateur de contenance
81 minuterie
82 dispositif de commutation
83 buse ou régulateur
84 vanne
85 bascule

**Revendications**

1. Signalisateur de fuite pour réservoir comprenant un détecteur de la dépression en un point immergé dans une substance liquide à semi-liquide contenue dans un réservoir fermé hermétiquement et une pompe commandée par ledit détecteur et aspirant du gaz du volume gazeux au-dessus de la substance pour maintenir une dépression à l'endroit dudit point, caractérisé par le fait que des dispositifs qu'il comprend fournissent deux grandeurs dont l'ensemble est fonction, au moins approximativement, d'une part, d'un rapport entre la racine carrée de la dépression dans ledit volume et le taux de fuite exprimé en fonction de ce volume, d'un temps pendant l'arrêt de la pompe et de l'écart de dépression correspondant à ce temps, et, d'autre part, d'une limite prédéterminée dudit rapport et indiquent, par comparaison desdites grandeurs, si le taux de fuite est trop grand.

2. Signalisateur de fuite pour réservoir comprenant un détecteur de la dépression en un point immergé dans une substance liquide à semi-liquide contenue dans un réservoir fermé hermétiquement et une pompe commandée par ledit détecteur et aspirant du gaz du volume gazeux au-dessus de la substance pour maintenir une dépression à l'endroit dudit point, caractérisé par le fait que des dispositifs qu'il comprend fournissent deux grandeurs dont l'ensemble est fonction, au moins approximativement, d'une part, d'un rapport entre la racine carrée de la dépression dans ledit volume et le taux de fuite exprimé en fonction de ce volume, d'un temps pendant le fonctionnement de la pompe, de l'écart de dépression correspondant à ce temps et du débit de pompage du gaz, et, d'autre part, d'une limite prédéterminée dudit rapport et indiquent, par comparaison desdites grandeurs, si le taux de fuite est trop grand.

3. Signalisateur de fuite pour réservoir comprenant un détecteur de la dépression en un point immergé dans une substance liquide à semi-liquide contenue dans un réservoir fermé hermétiquement et une pompe commandée par ledit détecteur et aspirant du gaz du volume gazeux au-dessus de la substance pour maintenir une dépression à l'endroit dudit point, caractérisé par le fait que des dispositifs qu'il comprend fournissent deux grandeurs dont l'ensemble est fonction, au moins approximativement, d'une part, d'un rapport entre la racine carrée de la dépression dans ledit volume et le taux de fuite exprimé en fonction d'un temps pendant l'arrêt de la pompe, de l'écart de dépression correspondant à ce temps, d'un temps pendant le fonctionnement de la pompe, de l'écart de dépression correspondant à cet autre temps et du débit de pompage du gaz, lesdits temps et lesdits écarts correspondant à une même valeur dudit volume, et, d'autre part, d'une limite prédéterminée dudit rapport et indiquent, par comparaison desdites grandeurs, si le taux de fuite est trop grand.

4. Signalisateur de fuite pour réservoir comprenant un détecteur de la dépression en un point immergé dans une substance liquide à semi-liquide contenue dans un réservoir fermé hermétiquement et une pompe commandée par ledit détecteur et aspirant du gaz du volume gazeux au-dessus de la substance pour maintenir une dépression à l'endroit dudit point, caractérisé par le fait que des dispositifs qu'il comprend fournissent deux grandeurs dont l'ensemble est fonction, au moins approximativement, d'une part, d'un rapport entre la racine carrée de la dépression dans ledit volume et le taux de fuite exprimé en fonction d'un temps pendant l'arrêt de la pompe, d'un temps pendant le fonctionnement de la pompe et du débit de pompage du gaz, lesdits temps correspondant à une même valeur dudit volume et à des écarts de dépression de même valeur, et, d'autre part, d'une limite prédéterminée dudit rapport et indiquent, par comparaison desdites grandeurs, si le taux de fuite est trop grand.

5. Signalisateur selon l'une des revendications 2 à 4, caractérisé par le fait qu'il comprend une réduction de la section du conduit d'aspiration de la pompe et par le fait que ledit débit dépend de cette réduction.

6. Signalisateur selon l'une des revendications 2 à 4, caractérisé par le fait qu'il comprend un régulateur de la dépression à l'entrée de la pompe et par le fait que ledit débit dépend de cette régulation.

7. Signalisateur selon l'une des revendications 1 à 6, caractérisé par le fait qu'il comprend au moins un dispositif avertissant si la dépression à l'endroit dudit point est inférieure à une valeur prédéterminée.

8. Signalisateur selon l'une des revendications 1 à 7, caractérisé par le fait qu'il comprend et qu'il commande une vanne d'admission de gaz dans le réservoir pour compenser le volume des quantités de substance soutirées.

9. Signalisateur selon l'une des revendications 1 à 8, caractérisé par le fait que l'indication est effectuée par un dispositif verrouillant l'orifice de remplissage du réservoir ou l'accès à cet orifice.

10. Signalisateur selon l'un des revendications 1 à 8, caractérisé par le fait qu'il comprend et qu'il commande un dispositif de verrouillage de l'orifice de remplissage du réservoir ou de l'accès à cet orifice.

## Claims

1. System for signalling a leakage in a tank, comprising a detector for the underpressure at a point immersed in a liquid to semi-liquid substance contained in the hermetically sealed tank and a pump controlled by the said detector and extracting gas from gaseous volume above the substance in order to maintain an underpressure at the said point, characterized in that devices comprising it furnish two quantities, which together vary, at least approximately, as a function of, on the one hand, a ratio between the square root of the underpressure in the said volume and the leakage rate expressed in terms of this volume, of a time during which the pump is stopped and of the difference in underpressure corresponding to this time, and, on the other hand, a predetermined limit of the said ratio, and indicate, by comparison of the said quantities, if the leakage rate is too great.

2. System for signalling a leakage in a tank, comprising a detector for the underpressure at a point immersed in a liquid to semi-liquid substance contained in the hermetically sealed tank and a pump controlled by the said detector and extracting gas from gaseous volume above the substance in order to maintain an underpressure at the said point, characterized in that devices comprising it furnish two quantities, which together vary, at least approximately, as a function of, on the one hand, a ratio between the square root of the underpressure in the said volume and the leakage rate expressed in terms of this volume, of a time during which the pump is running, of the difference in underpressure corresponding to this time and of the pumping rate of gas, and, on the other hand, a predetermined limit of the said ratio, and indicate, by comparison of the said quantities, if the leakage rate is too great.

3. System for signalling a leakage in a tank, comprising a detector for the underpressure at a point immersed in a liquid to semi-liquid substance contained in the hermetically sealed tank and a pump controlled by the said detector and extracting gas from gaseous volume above the substance in order to maintain an underpressure at the said point, characterized in that devices comprising it furnish two quantities, which together vary, at least approximately, as a function of, on the one hand, a ratio between the square root of the underpressure in the said volume and the leakage rate expressed in terms of a time during which the pump is stopped, of the difference in underpressure corresponding to this time, of a time during which the pump is running, of the difference in underpressure corresponding to this other time and of the pumping rate of gas, the said times and the said differences corresponding to a same value of the said volume, and, on the other hand, a predetermined limit of the said ratio, and indicate, by comparison of the said quantities, if the leakage rate is too great.

4. System for signalling a leakage in a tank, comprising a detector for the underpressure at a point immersed in a liquid to semi-liquid substance contained in the hermetically sealed tank and a pump controlled by the said detector and extracting gas from gaseous volume above the substance in order to maintain an underpressure at the said point, characterized in that devices comprising it furnish two quantities, which together vary, at least approximately, as a function of, on the one hand, a ratio between the square root of the underpressure in the said volume and the leakage rate expressed in terms of a time during which the pump is stopped, of a time during which the pump is running and of the pumping rate of gas, these two times corresponding to a same value of the said volume and to differences in

EP 0 210 201 B1

underpressure of same value, and, on the other hand, a predetermined limit of the said ratio, and indicate, by comparison of the said quantities, if the leakage rate is too great.

5. System according to any of claims 2 to 4, characterized in that it comprises a reduction of the cross-sectional area of the extraction duct of the pump and in that the pumping rate of gas depends on this reduction.

6. System according to any of claims 2 to 4, characterized in that it comprises a regulator of the underpressure at the input to the pump and in that the pumping rate of gas depends on this regulation.

7. System according to any of claims 1 to 6, characterized in that it comprises at least a device warning if the underpressure at the said point is below a predetermined value.

8. System according to any of claims 1 to 7, characterized in that it comprises and controls a valve admitting gas into the tank to compensate for the volumes of substance withdrawn.

9. System according to any of claims 1 to 8, characterized in that the indication is made by a device locking the filling aperture of the tank or access to this aperture.

10. System according to any of claims 1 to 8, characterized in that it comprises and controls a locking-device for the filling aperture of the tank or for access to this aperture.


## Patentansprüche

1. Leck-Anzeigevorrichtung für Behälter, bestehend aus einem Unterdruckfühler, dessen Messpunkt im flüssigen bis halbflüssigen Inhalt eines gasdicht verschlossenen Behälters getaucht ist, und einer dadurch geregelten Pumpe, die im Gasraum oberhalb des Inhaltes liegendes Gas absaugt, damit ein Unterdruck am Ort des bestimmten Punktes bestehen bleibt, gekennzeichnet dadurch, dass bestehende Vorrichtungen zwei Grössen liefern, deren Gesamtheit Funktion, mindestens annähernd, von einerseits einem Verhältnis zwischen der quadratischen Wurzel des Unterdruckes in dem Gasraum und der Leckrate ausgedrückt in Funktion dieses Gasvolumens, einer Zeit während des Stillstands der Pumpe und der zu dieser Zeit zugehörigen Unterdrucksänderung, und anderseits einem vorbestimmten Grenzwert des genannten Verhältnisses ist, und durch Vergleich der genannten Grössen anzeigen, ob die Leckrate zu gross ist.

2. Leck-Anzeigevorrichtung für Behälter, bestehend aus einem Unterdruckfühler, dessen Messpunkt im flüssigen bis halbflüssigen Inhalt eines gasdicht verschlossenen Behälters getaucht ist, und einer dadurch geregelten Pumpe, die im Gasraum oberhalb des Inhaltes liegendes Gas absaugt, damit ein Unterdruck am Ort des bestimmten Punktes bestehen bleibt, gekennzeichnet dadurch, dass bestehende Vorrichtungen zwei Grössen liefern, deren Gesamtheit Funktion, mindestens annähernd, von einerseits einem Verhältnis zwischen der quadratischen Wurzel des Unterdruckes in dem Gasraum und der Leckrate ausgedrückt in Funktion dieses Gasvolumens, einer Zeit während des Betriebs der Pumpe, der zu dieser Zeit zugehörigen Unterdrucksänderung und der Gaspumpenrate, und anderseits einem vorbestimmten Grenzwert des genannten Verhältnisses ist, und durch Vergleich der genannten Grössen anzeigen, ob die Leckrate zu gross ist.

3. Leck-Anzeigevorrichtung für Behälter, bestehend aus einem Unterdruckfühler, dessen Messpunkt im flüssigen bis halbflüssigen Inhalt eines gasdicht verschlossenen Behälters getaucht ist, und einer dadurch geregelten Pumpe, die im Gasraum oberhalb des Inhaltes liegendes Gas absaugt, damit ein Unterdruck am Ort des bestimmten Punktes bestehen bleibt, gekennzeichnet dadurch, dass bestehende Vorrichtungen zwei Grössen liefern, deren Gesamtheit Funktion, mindestens annähernd, von einerseits einem Verhältnis zwischen der quadratischen Wurzel des Unterdruckes in dem Gasraum und der Leckrate ausgedrückt in Funktion einer Zeit während des Stillstands der Pumpe, der zu dieser Zeit zugehörigen Unterdrucksänderung, einer Zeit während des Betriebs der Pumpe, der zu dieser anderen Zeit zugehörigen Unterdrucksänderung und der Gaspumpenrate, die genannten Zeiten und Änderungen zu demselben Wert des Gasvolumens gehörend, und anderseits einem vorbestimmten Grenzwert des genannten Verhältnisses ist, und durch Vergleich der genannten Grössen anzeigen, ob die Leckrate zu gross ist.

4. Leck-Anzeigevorrichtung für Behälter, bestehend aus einem Unterdruckfühler, dessen Messpunkt im flüssigen bis halbflüssigen Inhalt eines gasdicht verschlossenen Behälters getaucht ist, und einer dadurch geregelten Pumpe, die im Gasraum oberhalb des Inhaltes liegendes Gas absaugt, damit ein Unterdruck am Ort des bestimmten Punktes bestehen bleibt, gekennzeichnet dadurch, dass bestehende Vorrichtungen zwei Grössen liefern, deren Gesamtheit Funktion, mindestens annähernd, von einerseits einem Verhältnis zwischen der quadratischen Wurzel des Unterdruckes in dem Gasraum und der Leckrate ausgedrückt in Funktion einer Zeit während des Stillstands der Pumpe, einer Zeit während des Betriebs der Pumpe und der Gaspumpenrate, die genannten Zeiten zu demselben Wert des Gasvolumens und zu gleichen Unterdrucksänderungen gehörend, und anderseits einem vorbestimmten Grenzwert des genannten Verhältnisses ist, und durch Vergleich der genannten Grössen anzeigen, ob die Leckrate zu gross ist.

5. Anzeigevorrichtung nach einem der Ansprüche 2 bis 4, dadurch gekennzeichnet, dass sie eine Querschnittverringerung der Absaugleitung der Pumpe einschliesst und dass die Gaspumpenrate davon abhängt.

15

6. Anzeigevorrichtung nach einem der Ansprüche 2 bis 4, dadurch gekennzeichnet, dass sie einen Regulator des Unterdruckes am Eingang der Pumpe einschliesst und dass die Gaspumpenrate davon abhängt.

7. Anzeigevorrichtung nach einem der Ansprüche 1 bis 6, dadurch gekennzeichnet, dass sie mindestens eine Warnvorrichtung einschliesst, die anzeigt, ob der Unterdruck am Ort des genannten Punktes kleiner als ein vorbestimmter Wert ist.

8. Anzeigevorrichtung nach einem der Ansprüche 1 bis 7, dadurch gekennzeichnet, dass sie ein Gaseinlassventil einschliesst und steuert, das dazu das Volumen abgesaugter Mengen des genannten Inhaltes auszugleichen im Behälter dient.

9. Anzeigevorrichtung nach einem der Ansprüche 1 bis 8, dadurch gekennzeichnet, dass die Leckanzeige durch eine Vorrichtung gemacht wird, die die Einfüllöffnung des Behälters oder dessen Zutritt verriegelt.

10. Anzeigevorrichtung nach einem der Ansprüche 1 bis 8, dadurch gekennzeichnet, dass sie eine Verriegelungsvorrichtung der Einfüllöffnung des Behälters oder dessen Zutritts einschliesst und steuert.

FIG. 2

FIG. 1

FIG.3

FIG.4

EP 0 210 201 B1

EP 0 210 201 B1

FIG.6

FIG.5

3

FIG.7

FIG.8

FIG.9

FIG.10

FIG.11

FIG.12

EP 0 210 201 B1